# EUROPEAN PATENT SPECIFICATION

(11) **EP 2 193 969 B1**
(45) Date of publication and mention of the grant of the patent: **08.02.2012**
(21) Application number: 09014997.2
(22) Date of filing: 03.12.2009
(51) Int. Cl.: B60W 30/18, B60K 6/46

(54) **Vehicle control system**
Fahrzeugsteuerungssystem
Système de commande de véhicule

(30) Priority: 05.12.2008 JP 2008310372
(43) Date of publication of application: 09.06.2010
(73) Proprietor: Hitachi Ltd., Chiyoda-ku Tokyo (JP)
(72) Inventor: Miyauchi, Tsutomu, Tokyo 100-8220 (JP); Ishida, Seiji, Tokyo 100-8220 (JP); Toyota, Eiichi, Hitachinaka-shi, Ibaraki (JP); Shimada, Motomi, Tokyo 100-8220 (JP); Kaneko, Takashi, Tokyo 100-8220 (JP)
(74) Representative: Beetz & Partner

(56) References cited:
- EP-A2- 1 876 082
- FR-A1- 2 851 516
- US-A1- 2005 088 139
- US-A1- 2008 236 916

## Description

### BACKGROUND OF THE INVENTION

The present invention relates to a hybrid system of a vehicle including a storage battery device and a diesel engine. A vehicle system as described in the preamble portion of patent claim 1 has been known from EP 1 876 082 A2.

In the field of automobile, a driving system for a vehicle is disclosed in JP-2004-312853 A that drives one of front and rear drive shafts by using an engine and the other drive shaft is driven by using an electric motor according to need. A control method is disclosed in JP-2008-54408 A that determines an engine output based on a speed of a vehicle, a storage amount of a storage battery device and a running state of the vehicle, and controls to keep the storage amount of the storage battery device within a certain range. By doing so, the method can handle both of assisting driving by a battery and regeneration.

### SUMMARY OF THE INVENTION

In the system disclosed in JP-2004-312853 A, when the vehicle runs under a heavy load condition an engine output is required to be equal to an energy for driving one of front and rear drive shafts, and the other drive shaft is driven by the motor according to need. However, when the vehicle runs under e.g. a low or a middle load condition and coasting where an assistance by the motor is not needed, the output of the side of the one shaft connected to the engine is higher than the energy required for the vehicle's running in order to get ready for a subsequent acceleration, and at the other side of shaft the storage battery device is charged by using motor as a generator. This control system can obtain a high performance of acceleration. However, since charging of the storage battery device made by the engine output causes a loss in the storage battery device, this system is inefficient.

On the other hand, in a series hybrid system disclosed in JP-2008-54408 A, a control is performed for keeping a storage amount of the storage battery device within a certain range in order to handle both of assisting driving and regeneration. In order to keep the storage amount of the storage battery device, charging the storage battery device during vehicle's running is required. Therefore, the storage battery device is charged not only with a regeneration energy in regenerative breaking but also with an engine output. This system is also inefficient similar to the system disclosed in JP-2004-312853 A, as compared with the system where an engine directly drives an axle. The reason is that the engine charges the storage battery device and the charged storage battery device discharges for driving the axle, and losses in charging and discharging occur.

EP 1 876 082 A2 discloses a vehicle system with an electric generator which generates power by being driven by an engine; a storage battery device; a motor driven by power from said electric generator and said storage battery device; and an energy managing and control device.

The present invention is made in consideration of above-mentioned problem. It is an object of the present invention to decrease the losses generated in charging and discharging of the storage battery device and achieve a high efficiency.

This object is accomplished with a vehicle system as claimed in claim 1.

Dependent claims are directed on features of preferred embodiments of the invention.

By performing embodiments of the present invention, the losses occurred in charging and discharging can be decreased. Thus, a high efficiency can be achieved.

### BRIEF DESCRIPTION OF THE DRAWINGS

FIG. 1 is a schematic diagram according to a first embodiment of the present invention.
FIG. 2 shows graphs representing an example of an operation according to the first embodiment of the present invention.
FIG. 3 is a schematic diagram according to a second embodiment of the present invention.
FIG. 4 is a control block diagram controlled by the energy managing and control device 311 according to the second embodiment of the present invention.
FIG. 5 shows graphs representing an example of an operation according to the second embodiment of the present invention.

### DESCRIPTION OF THE EMBODIMENTS

Embodiments of the present invention will be described below with reference to attached drawings.

### [First embodiment]

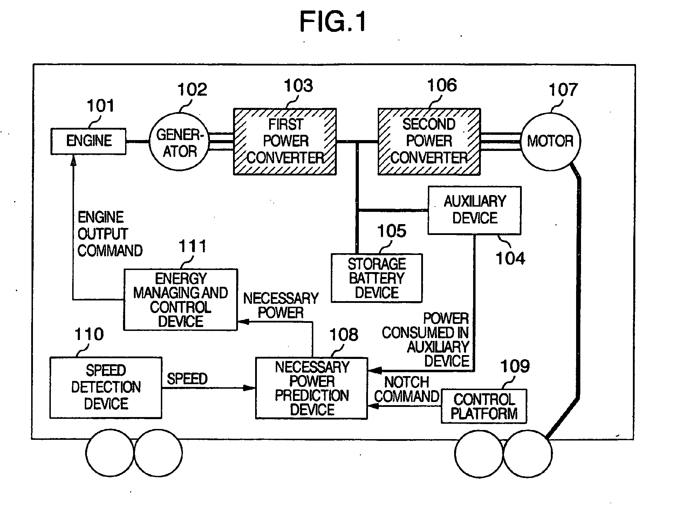

FIG. 1 is a diagram showing configurations of a system and controlling the system according to a first embodiment of the present invention. Three-phase AC power is generated from a generator 102 driven by a diesel engine 101 controlled based on an engine output command. A first power converter 103 converts the three-phase AC power into DC power. An auxiliary device 104, a storage battery device 105 and a second power converter 106 are connected to a DC side of the first power converter 103. Here, the auxiliary device 104 means such as a lighting device and an air conditioning device mounted on the vehicle. The second power converter 106 converts the DC power into three-phase AC power with a variable frequency for activating a motor 107 which drives a wheel. Thus, the vehicle runs. A necessary power prediction device 108 calculates power required for the second power converter 106 to drive the motor 107 and being consumed in the auxiliary device 104 (hereinafter referred to as necessary power), here the power for driving the motor 107 is calculated based on an operation command (such as a notch command)send by a motorman from a control platform and a vehicle speed detected by a speed detection device 110 such as a tacho-generator. The necessary power calculated by the necessary power prediction device 108 may have a negative value due to a regeneration energy when the vehicle is in breaking operation. An energy managing and control device 111 outputs an engine output command to the engine 101.

Contents processed by the energy managing and control device 111 are described as follows. When the necessary power has a negative value, regeneration power is generated, and the energy managing and control device 111 outputs 0 value as a engine output command. When the necessary power has a positive value, the energy managing and control device 111 compares a maximum engine output with the necessary power. If the necessary power is less than the maximum engine output, the energy managing and control device 111 outputs the value of the necessary power as the engine output command, and if the necessary power is equal to or more than the maximum engine output, the energy managing and control device 111 outputs the value of the maximum engine output as the engine output command. That is, the value of the engine output command from the energy managing and control device 111 is not more than the necessary power. Therefore, the storage battery device 105 is charged only by the regeneration power regenerated from the motor 107. ,

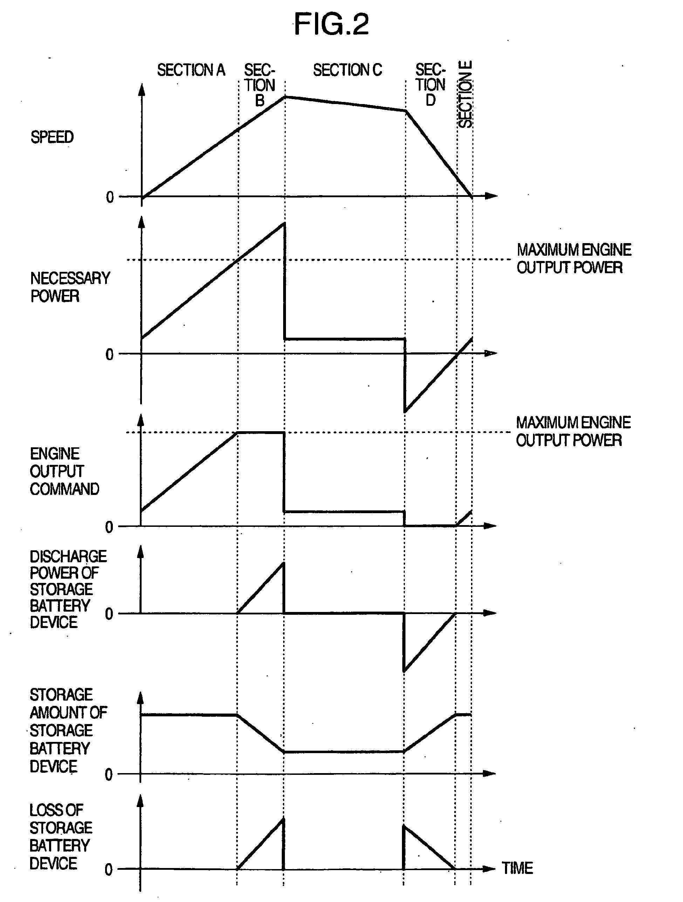

Fig. 2 is a result graph by use of the control according to the first embodiment.

Fig. 2 shows, in order from a top, a vehicle speed in time base, necessary power in time base, an engine output command in time base, discharge power of the storage battery device in time base, a storage amount of the storage battery device in time base, and a loss of the storage battery device in time base. Graphs are divided into A to E sections in each of which a different control is performed. Explanations of the sections A to E will follow in order.

### [Section A]

Section A is a time region from a stopped state of the vehicle to accelerated state in middle speed. The necessary power increases in connection with the increment of the vehicle speed. In this section A, since the necessary power is less than the maximum engine output, the value of the engine output command is the necessary power, and power required for consumption in the auxiliary device 104 and the second power converter 106 is supplied through the first power converter 103. Therefore, the value of the discharge power of the storage battery device 105 is 0, and the storage amount of the storage battery device 105 does not vary. In addition, since charge/discharge of the storage battery device 105 is not performed, the value of the loss of the storage battery device 105 is 0.

### [Section B]

In section B, as increasing of the vehicle speed, the necessary power increases. When the necessary power becomes equal to or more than the maximum engine output, the value of the engine output command is the maximum engine output. Since the power required for consumption in the auxiliary device 104 and the second power converter 106 can not be supplied only from the first power converter 103, discharging from the storage battery device 105 is started. In connection with the discharge, the storage amount of the storage battery device 105 decreases, and the loss of the storage battery device occurs.

### [Section C]

In section C, when the vehicle runs with coasting, the necessary power is power for consumption in the auxiliary device 104. Since the power consumed in the auxiliary device 104 is less than the maximum engine output, the value of the engine output command is the necessary power. Therefore, similar to in section A, the value of the discharge power of the storage battery device 105 is 0, and the storage amount of the storage battery device 105 does not vary. In addition, since charge/discharge of the storage battery device 105 is not performed, the value of the loss of the storage battery device 105 is 0.

### [Section D]

In section D, when the vehicle is decelerated, the necessary power has a negative value due to regeneration power, and the value of the engine output command is 0. The regeneration power is supplied through the second power converter 106 to the DC side, that is, the part of the regeneration power is distributed to the auxiliary device 104, and the rest of the regeneration power except for consumption power in the auxiliary device 104 is used for charging the storage battery device 105. In connection with the charge, the storage amount of the storage battery device increases, and the loss of the storage battery device 105 occurs. Then, since the value of the engine output command is 0, the engine 101 does not charge the storage battery device 105.

### [Section E]

In section E, when the power consumed in the auxiliary device 104 is more than the regeneration power obtained from the deceleration of the vehicle, the necessary power has a positive value. Then, since the necessary power is less than the maximum engine output, the value of the engine output command is the necessary power. Therefore, similar to in section A, the value of the discharge power of the storage battery device 105 is 0, and the storage amount of the storage battery device 105 does not vary. In addition, since charge/discharge of the storage battery device 105 is not performed, the value of the loss of the storage battery device 105 is 0.

As described above, charging the storage battery device 105 is performed only by use of the regeneration power. If the engine 101 charges the storage battery device 105 and the storage battery device 105 supplies power to the second storage battery device 106, an efficiency decreases due to a loss in connection with charge/discharge of the storage battery device 105, as compared with the case where the engine 101 directly supplies power to the second power converter 106. However, according to the present invention, since the energy from the engine 101 is not used for charging the storage battery device 105, the loss in connection with the charge/discharge can be reduced. Further, in the first embodiment, since the storage battery device 105 is charged only by use of the regeneration power regenerated from the motor 107, such a loss in connection with the charge/discharge can be suppressed, and the vehicle according to the first embodiment can achieve a high efficiency.

### [Second embodiment]

Next, a second embodiment of the present invention will be explained as follows.

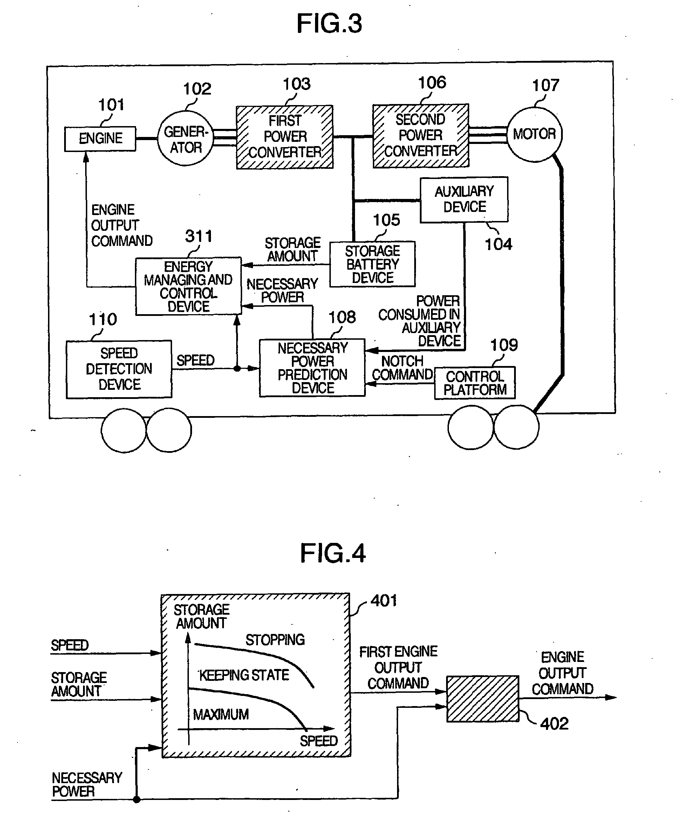

FIG. 3 is a diagram showing configurations of a system and controlling the system according to the second embodiment. The same device as in Fig. 1 is labeled with the same reference number as in Fig. 1 and explanation of the device is omitted. The configuration in Fig. 3 which differs from that in Fig. 1 is an energy managing and control device 311. The energy managing and control device 311 outputs an engine output command based on a storage amount outputted from a storage battery device 105, necessary power calculated by a necessary power prediction device 108, and a vehicle speed detected by a speed detection device 110.

Fig. 4 shows a configuration of the energy managing and control device 311.

The energy managing and control device 311 includes a storage amount control unit 401 and an output command determination unit 402. The storage amount control unit 401 calculates a control range of the storage amount based on the vehicle speed, and determines a first engine output command so as to control the storage amount within the control range. At first, a case is explained where the necessary power has a positive value. When the storage amount of the storage battery device 105 becomes equal to or more than an upper limit of the control range, the storage amount control unit 401 outputs 0 value as the first engine output command. When the storage amount of the storage battery device 105 becomes equal to or less than an lower limit of the control range, the storage amount control unit 401 outputs the value of the maximum engine output as the first engine output command. In the case where the necessary power has a negative value, the storage amount control unit 401 outputs 0 value as the first engine output command.

As well, a center of the control range is designated such that the storage amount decreases when the vehicle speed increases.

The output command determination unit 402, when the necessary power has a negative value, outputs 0 value as the engine output command because of the production of regenerative power. When the necessary power has a positive value, the output command determination unit 402 compares the first engine output command with the necessary power. If the necessary power is less than the first engine output command, the output command determination unit 402 outputs the value of the necessary power as the engine output command, and if the necessary power is equal to or more than the first engine output command, the output command determination unit 402 outputs the value of the first engine output command as the engine output command. That is, the value of the engine output command from the energy managing and control device 311 is not more than the necessary power. Therefore, the storage battery device 105 is charged only by the regeneration power regenerated from the motor 107.

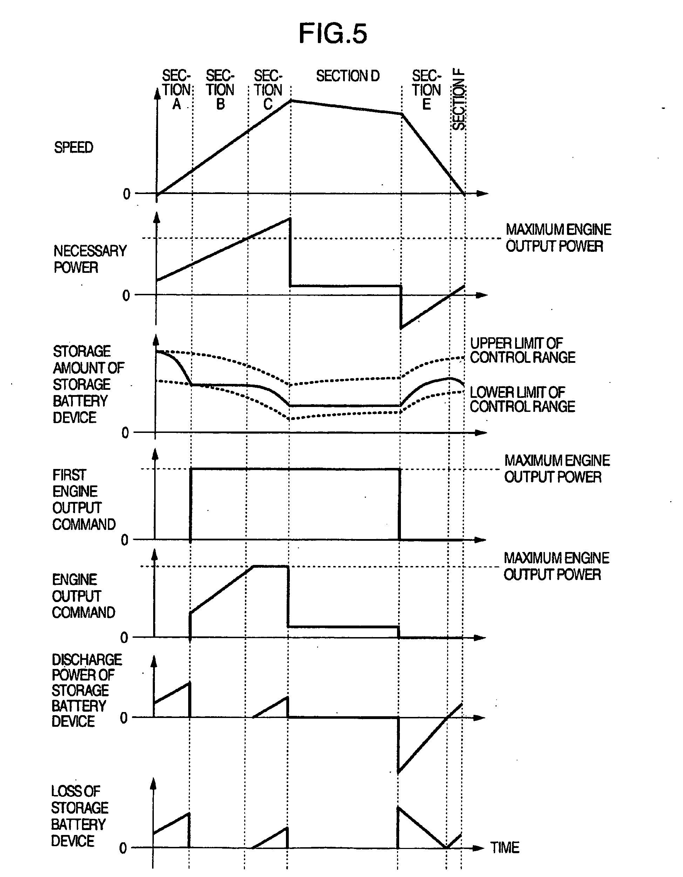

Fig. 5 is a result graph by use of the control according to the second embodiment.

Fig. 5 shows, in order from a top, a vehicle speed in time base, necessary power in time base, an engine output command in time base, discharge power of the storage battery device in time base, a storage amount of the storage battery device in time base, and a loss of the storage battery device in time base.

### [Section A]

Section A is a time region from a stopped state of the vehicle to accelerated state in middle speed. The necessary power increases in connection with the increment of the vehicle speed. The storage amount control unit 401 calculates a control range of the storage amount by use of the vehicle speed, and determines a first engine output command in order that the storage amount is within the control range. In this section A, since the storage amount of the storage battery device 105 is within the control range, the storage amount control unit 401 outputs 0 value as the first engine output command. Since the necessary power has a positive value and the value of the first engine output command is less than the necessary, the output command determination unit 402 outputs 0 value as the engine output command which is the first engine output command in this section A. Therefore, power required for consumption in the auxiliary device 104 and the second power converter 106 is not supplied from the first power converter 103 but from the storage battery device 105 by discharging. In connection with the discharge from the storage battery device 105, the storage amount of the storage battery device 105 decreases, and the loss of the storage battery device 105 occurs.

### [Section B]

In section B, when the storage amount of the storage battery device 105 decreases and becomes equal to or less than a lower limit of the control range of the storage amount, the storage amount control unit 401 outputs the value of the maximum engine output as the first engine output command. Since the necessary power has a positive value and the value of the first engine output command is more than the necessary power, the output command determination unit 402 outputs the value of the necessary power as the engine output command. Therefore, power for consumption in the auxiliary device 104 and the second power converter 106 is supplied from the generator 102 through the first power converter 103. Thus, the value of the discharge power of the storage battery device 105 is 0, and the storage amount of the storage battery device 105 does not vary. In addition, since charge/discharge of the storage battery device 105 is not performed, the value of the loss of the storage battery device 105 is 0. As well, even though the control range drops in connection with an increment of the vehicle speed and the storage amount enter the control range, the same operation continues in section B because the first engine output command is held.

### [Section C]

In section C, the necessary power increase when the vehicle speed increases, and exceeds the maximum engine output. As well, since the storage amount is within the control range, the first engine output command is kept being the maximum engine output. Thus, the necessary power is equal to or more than the value of the first engine output command, therefore the engine output command is the value of the maximum engine output which is the first engine output command. As well, since the power for consumption in the auxiliary device 104 and the second power converter 106 can not be supplied only from the first power converter, the storage battery device 105 discharges and supplies deficiency power. In connection with the discharge of the storage battery device 105, the storage amount decreases, and a loss of the storage battery device 105 occurs.

### [Section D]

In section D, when the vehicle runs with coasting, the necessary power is power for consumption in the auxiliary device 104. Since the storage amount is within the control range, the value of the first engine output command is kept being the maximum engine output. The necessary power is less than the value of the first engine output command, the output command determination unit 402 outputs the value of the necessary power as the engine output command. Thus, power for consumption in the auxiliary device 104 is supplied through the first power converter 103. The value of the discharge power of the storage battery device 105 is 0, and the storage amount of the storage battery device 105 does not vary. In addition, since charge/discharge of the storage battery device 105 is not performed, the value of the loss of the storage battery device 105 is 0.

### [Section E]

In section E, when the vehicle is decelerated, the necessary power has a negative value, and the value of the engine output command is 0. Regeneration power is supplied through the second power converter 106 to the DC side, that is, the part of the regeneration power is distributed to the auxiliary device 104, and the rest of the regeneration power except for consumption power in the auxiliary device 104 is used for charging the storage battery device 105. In connection with the charge, the storage amount of the storage battery device increases, and the loss of the storage battery device 105 occurs. Then, since the value of the engine output command is 0, the engine 101 does not charge the storage battery device 105.

### [Section F]

In section F, when the power consumed in the auxiliary device 104 is more than the regeneration power obtained from the deceleration of the vehicle, the necessary power has a positive value. Since the storage amount of the storage battery device 105 is within the control range due to the charge of the storage battery device 105 by the regeneration power, the value of the first engine output command is kept being 0. Therefore, similar to in section A, the shortfall power, which cannot be supplied by the regeneration power from the second converter 106, is supplied from the storage battery device 105 by discharging, not from the first converter 103. In connection with the discharge from the storage battery device 105, the storage amount of the storage battery device 105 decreases, and the loss of the storage battery device 105 occurs.

As described above, the storage battery device 105 is not charged by an energy from the engine 101. As compared with the case where the engine 101 directly supplies power to the second power converter 106, if the engine 101 charges the storage battery device 105 and the storage battery device 105 supplies power to the second power converter 106, an efficiency decreases due to the loss in connection with charge/discharge of the storage battery device 105. However, in the second embodiment, since the storage battery device 105 is charged only by the regeneration power, such a loss in connection with the charge/discharge does not occurs, and the vehicle according to the second embodiment can achieve a high efficiency.

According to the.embodiments of the present invention, a whole energy, especially from the engine of the vehicle on moving, is consumed in a motor and an auxiliary device, and not used for charging a storage battery device in order to reduce a loss in connection with charge/discharge of the storage battery device. In addition, the storage battery device is charged only by the regeneration power from the motor, so that a number of times of charge/discharge of the storage battery device can be reduced and an amount of a loss in connection with the charge/discharge can also be reduced.

## Claims

1. A vehicle system with
an electric generator (102) which generates power by being driven by an engine (101);
a storage battery device (105);
a motor (107) driven by power from said electric generator (102) and said storage battery device (105); and
an energy managing and control device (111 or 311) **characterized in that** said energy managing and control device (111 or 311) controls said engine (101) such that generation power of said electric generator (102) is equal to or less than power consumed in said motor (107).

2. A vehicle system according to claim 1, **characterized in that** said energy managing and control device (111 or 311) controls said engine (101) in order that generation power of said electric generator (102) is consumed in a device except for said storage battery device (105).

3. The vehicle system according to claim 1 or 2, further **characterized by** comprising:
a control platform (109) which outputs an operation command;
a vehicle speed detection device (110) which detects a vehicle speed; and
a necessary power prediction device (108) which calculates necessary power for driving said motor (107) and activating another device mounted on said vehicle based on said operation command and said vehicle speed detected by said vehicle speed detection device (110), wherein
when said necessary power is equal to or more than a maximum engine output said energy managing and control device (111 or 311) outputs a value of said maximum engine output as a engine output command, and when said necessary power has a negative value said energy managing and control device (111 or 311) outputs 0 value as said engine output command, and otherwise said energy managing and control device (111 or 311) outputs a value of said necessary power as said engine output command.

4. A vehicle system according to at least one of the preceding claims, **characterized in that**
said engine (101) is controlled based on an engine output command;
said electric generator (102) generates AC power by being driven by said engine (101);
a first power converter (103) is provided to convert said AC power into DC power;
said storage battery device (105) is connected to a DC side of said first power converter (103);
a second power converter (106) is provided to convert said DC power into AC power with a variable frequency, and being connected to the DC side of said first power converter (103) and said storage battery device (105); and
said motor (107) is driven by said AC current generated by said second power converter (106), wherein
a value of said engine output command is created so as to be equal to or less than power required for consumption in said motor (107) and an auxiliary device (104).

5. The vehicle system according to claims 1, 2 or 4, wherein charging said storage battery device (105) during the vehicle's movement is performed only by use of regeneration power from said motor (107).

6. The vehicle system according to claim 4, further **characterized by** comprising:
a control platform (109) which outputs an operation command;
a vehicle speed detection device (110) which detects a vehicle speed;
a necessary power prediction device (108) which calculates necessary power for activating said motor (107) and said auxiliary device (104) based on said operation command and said vehicle speed detected by said vehicle speed detection device (110); and
an energy managing and control device (111 or 311) which outputs a value of a maximum engine output as a engine output command when necessary power is equal to or more than said maximum engine output, and outputs 0 value as said engine output command when said necessary power has a negative value, and otherwise outputs a value of said necessary power as said engine output command.

7. The vehicle system according to claim 4, further **characterized by** comprising:
a control platform (109) which outputs an operation command;
a vehicle speed detection device (110) which detects a vehicle speed;
a necessary power prediction device (108) which calculates necessary power for activating said motor (107) and said auxiliary device (104) based on said operation command and a speed detected by said vehicle speed detection device (110); and
an energy managing and control device (311) which calculates a control range of a storage amount of said storage battery device (105) based on said vehicle speed detected by said vehicle speed detection device (110), and creates a first engine output command in order that said storage amount of said storage battery device (105) is within said control range, and outputs a value of said first engine output command as an engine output command when said first engine output command less than said necessary power, and outputs 0 value as said engine output command when said necessary power has a negative value, and otherwise outputs a value of said necessary power as said engine output command.

## Patentansprüche

1. Fahrzeugsystem mit
einem elektrischen Generator (102), der Strom **dadurch** erzeugt, dass er durch einen Verbrennungsmotor (101) angetrieben wird,
einer Speicherbatterie (105),
einem Motor (107), der durch den Strom des elektrischen Generators (102) und der Speicherbatterie (105) angetrieben wird, und
einer Energiesteuerungsvorrichtung (111 oder 311),
**dadurch gekennzeichnet, dass**
die Energiesteuerungsvorrichtung (111 oder 311) den Verbrennungsmotor (101) so steuert, dass die von dem elektrischen Generator (102) erzeugte Strommenge kleiner oder gleich der Strommenge ist, die von dem Motor (107) verbraucht wird.

2. Fahrzeugsystem nach Anspruch 1,
**dadurch gekennzeichnet, dass** die Energiesteuerungsvorrichtung (111 oder 311) den Verbrennungsmotor (101) derart steuert, dass die von dem elektrischen Generator (102) erzeugte Strommenge in einer anderen Vorrichtung als der Speicherbatterie (105) verbraucht wird.

3. Fahrzeugsystem nach Anspruch 1 oder 2,
**dadurch gekennzeichnet, dass** es ferner aufweist:
eine Steuereinheit (109), die ein Betriebssteuersignal ausgibt,
eine Vorrichtung (110) zum Erfassen der Fahrzeuggeschwindigkeit, welche die Fahrzeuggeschwindigkeit erfasst, und
eine Vorrichtung (108) zur Vorhersage der erforderlichen Strommenge, die die Strommenge berechnet, die notwendig ist, um den Motor (107) anzutreiben und um eine weitere Vorrichtung, die im Fahrzeug angebracht ist, zu betätigen auf der Grundlage des Betriebssteuersignals und der von der Vorrichtung zur Erfassung der Fahrzeuggeschwindigkeit (110) erfassten Fahrzeuggeschwindigkeit, wobei,
wenn die erforderliche Strommenge größer oder gleich einer maximalen Energieabgabe ist, die Energiesteuerungsvorrichtung (111 oder 311) einen Wert der maximalen Energieabgabe als Verbrennungsmotorleistungssteuersignal ausgibt, und wenn die erforderliche Strommenge einen negativen Wert aufweist, die Energiesteuerungsvorrichtung (111 oder 311) einen Null-Wert als Verbrennungsmotorabgabeleistungssteuersignal ausgibt, und anderenfalls die Energiesteuerungsvorrichtung (111 oder 311) einen Wert der erforderlichen Strommenge als Verbrennungsmotorabgabeleistungssteuersignal ausgibt.

4. Fahrzeugsystem nach mindestens einem der vorstehenden Ansprüche, **dadurch gekennzeichnet, dass**
der Verbrennungsmotor (101) auf der Grundlage eines Verbrennungsmotorabgabeleistungssteuersignals gesteuert wird,
der elektrische Generator (102) einen Wechselstrom erzeugt, indem er durch den Verbrennungsmotor (101) angetrieben wird,
ein erster Stromwandler (103) vorgesehen ist, um den Wechselstrom in Gleichstrom umzuwandeln,
die Speicherbatterie (105) an den Gleichstromausgang des ersten Stromwandlers (103) angeschlossen ist,
ein zweiter Stromwandler (106) vorgesehen ist, um den Gleichstrom in Wechselstrom mit variabler Frequenz umzuwandeln, der an dem Gleichstromausgang des ersten Stromwandlers (103) und an der Speicherbatterie (105) angeschlossen ist, und
der Motor (107) durch den Wechselstrom angetrieben wird, der von dem zweiten Stromwandler (106) erzeugt wird, wobei
ein Wert des Verbrennungsmotorabgabeleistungssteuersignals erzeugt wird, der kleiner oder gleich einer Strommenge ist, die erforderlich ist für den Verbrauch des Motors (107) und einer Hilfsvorrichtung (104).

5. Fahrzeugsystem nach den Ansprüchen 1, 2 oder 4, wobei das Laden der Speicherbatterie (105) während des Fahrens des Fahrzeugs nur durch Verwendung des von dem Motor (107) erzeugten Stroms erfolgt.

6. Fahrzeugsystem nach Anspruch 4, **dadurch gekennzeichnet, dass** es ferner aufweist:
ein Steuerelement (109), welches ein Betriebssteuerungssignal abgibt,
eine Vorrichtung (110) zur Erfassung der Fahrzeuggeschwindigkeit,
eine Vorrichtung (108) zur Vorhersage der erforderlichen Strommenge, die die Strommenge berechnet, die erforderlich ist, um den Motor (107) und die Hilfsvorrichtung (104) zu betreiben, auf der Grundlage des Betriebssteuerungssignals und der von der Vorrichtung (110) zur Erfassung der Fahrzeuggeschwindigkeit erfassten Fahrzeuggeschwindigkeit, und
eine Energiesteuerungsvorrichtung (111 oder 311), die einen Wert einer maximalen Energieabgabe als Verbrennungsmotorabgabeleistungssteuerungssignal abgibt, wenn die erforderliche Strommenge größer oder gleich der maximalen Verbrennungsmotorabgabeleistung ist, und die einen Wert Null als Verbrennungsmotorabgabeleistungssteuersignal abgibt, wenn die erforderliche Strommenge einen negativen Wert aufweist, und anderenfalls einen Wert der erforderlichen Strommenge als Verbrennungsmotorabgabeleistungssteuersignal abgibt.

7. Fahrzeugsystem nach Anspruch 4, **dadurch gekennzeichnet, dass** es ferner aufweist:
ein Steuerelement (109) welches ein Betriebssteuerungssignal abgibt,
eine Vorrichtung (110) zur Erfassung der Fahrzeuggeschwindigkeit,
eine Vorrichtung (108) zur Vorhersage der erforderlichen Strommenge, die die erforderliche Strommenge für die Betätigung des Motors (107) und der Hilfsvorrichtung (104) berechnet auf der Grundlage des Betriebssteuerungssignals und der Geschwindigkeit, die von der Vorrichtung (110) zur Erfassung der Fahrzeuggeschwindigkeit erfasst wird, und
eine Energiesteuerungsvorrichtung (311), die einen Steuerungsbereich einer Speichermenge der Speicherbatterie (105) berechnet auf der Grundlage der von der Vorrichtung (110) zur Erfassung der Fahrzeuggeschwindigkeit erfassten Fahrzeuggeschwindigkeit, und die ein erstes Verbrennungsmotorabgabeleistungssteuersignal derart erzeugt, dass die Speichermenge der Speicherbatterie (105) innerhalb des Steuerungsbereiches liegt, und die einen Wert des ersten Verbrennungsmotorabgabeleistungssteuersignals als ein Verbrennungsmotorabgabesteuersignal abgibt, wenn das erste Verbrennungsmotorabgabeleistungssteuersignal kleiner ist als die erforderliche Strommenge, und die einen Wert Null als Verbrennungsmotorabgabeleistungssteuersignal abgibt, wenn die erforderliche Strommenge einen negativen Wert hat, und anderenfalls einen Wert der erforderlichen Strommenge als Verbrennungsmotorabgabeleistungssteuersignal abgibt.

## Revendications

1. Système de véhicule comportant
un générateur électrique (102) qui génère un courant lorsqu'il est entraîné par un moteur (101) ;
un dispositif de batterie d'accumulateurs (105) ;
un moteur électrique (107) entraîné par le courant provenant dudit générateur électrique (102) et dudit dispositif de batterie d'accumulateurs (105) ; et
un dispositif de contrôle et de gestion d'énergie (111 ou 311) **caractérisé en ce que** ledit dispositif de contrôle et de gestion d'énergie (111 ou 311) commande ledit moteur (101) de sorte que le courant généré par ledit générateur électrique (102) soit égal ou inférieur au courant consommé dans ledit moteur électrique (107).

2. Le système de véhicule selon la revendication 1, **caractérisé en ce que** ledit dispositif de contrôle et de gestion d'énergie (111 ou 311) commande ledit moteur (101) afin que le courant généré par ledit générateur électrique (102) soit consommé dans un dispositif à l'exception dudit dispositif de batterie d'accumulateurs (105).

3. Le système de véhicule selon la revendication 1 ou 2, **caractérisé en outre par le fait qu'**il comprend:
une plateforme de commande (109) qui produit une commande de fonctionnement ;
un dispositif de détection de vitesse du véhicule (110) qui détecte une vitesse du véhicule ; et
un dispositif de prédiction du courant nécessaire (108) qui calcule le courant nécessaire pour entraîner ledit moteur électrique (107) et activer un autre dispositif monté sur ledit véhicule sur la base de ladite commande de fonctionnement et de ladite vitesse du véhicule détectée par ledit dispositif de détection de vitesse du véhicule (110), dans lequel
quand ledit courant nécessaire est égal ou supérieur à une puissance maximale du moteur, ledit dispositif de contrôle et de gestion d'énergie (111 ou 311) produit une valeur de ladite puissance maximale du moteur comme commande de puissance du moteur, et quand ledit courant nécessaire a une valeur négative, ledit dispositif de contrôle et de gestion d'énergie (111 ou 311) produit une valeur 0 comme commande de puissance du moteur, et autrement ledit dispositif de contrôle et de gestion d'énergie (111 ou 311) produit une valeur dudit courant nécessaire comme commande de puissance du moteur.

4. Système de véhicule selon au moins l'une des revendications précédentes, **caractérisé en ce que**
ledit moteur (101) est commandé sur la base d'une commande de puissance du moteur ;
ledit générateur électrique (102) génère un courant alternatif lorsqu'il est entraîné par ledit moteur (101) ;
un premier convertisseur de courant (103) est fourni pour convertir ledit courant alternatif en courant continu ;
ledit dispositif de batterie d'accumulateurs (105) est relié à un côté courant continu dudit premier convertisseur de courant (103) ;
un second convertisseur de courant (106) est fourni pour convertir ledit courant continu en courant alternatif avec une fréquence variable et est relié au côté courant continu dudit premier convertisseur de courant (103) et dudit dispositif de batterie d'accumulateurs (105) ; et
ledit moteur électrique (107) est entraîné par ledit courant alternatif généré par ledit second convertisseur de courant (106), dans lequel
une valeur de ladite commande de puissance du moteur est créée de manière à être égale ou inférieure au courant nécessaire à la consommation dudit moteur électrique (107) et d'un dispositif auxiliaire (104).

5. Le système de véhicule selon les revendications 1, 2 ou 4, dans lequel le chargement dudit dispositif de batterie d'accumulateurs (105) durant le déplacement du véhicule est réalisé uniquement en utilisant le courant de régénération provenant dudit moteur électrique (107).

6. Le système de véhicule selon la revendication 4, **caractérisé en outre par le fait qu'**il comprend:
une plateforme de commande (109) qui produit une commande de fonctionnement ;
un dispositif de détection de vitesse du véhicule (110) qui détecte une vitesse du véhicule ; et
un dispositif de prédiction du courant nécessaire (108) qui calcule le courant nécessaire pour activer ledit moteur électrique (107) et ledit dispositif auxiliaire (104) sur la base de ladite commande de fonctionnement et de ladite vitesse du véhicule détectée par ledit dispositif de détection de vitesse du véhicule (110) ; et
un dispositif de contrôle et de gestion d'énergie (111 ou 311) qui produit une valeur d'une puissance maximale du moteur comme commande de puissance du moteur quand le courant nécessaire est égal ou supérieur à ladite puissance maximale du moteur, et produit une valeur 0 comme commande de puissance du moteur quand ledit courant nécessaire a une valeur négative, et autrement produit une valeur dudit courant nécessaire comme commande de puissance du moteur.

7. Le système de véhicule selon la revendication 4, **caractérisé en outre par le fait qu'**il comprend :
une plateforme de commande (109) qui produit une commande de fonctionnement ;
un dispositif de détection de vitesse du véhicule (110) qui détecte une vitesse du véhicule ; et
un dispositif de prédiction du courant nécessaire (108) qui calcule le courant nécessaire pour activer ledit moteur électrique (107) et ledit dispositif auxiliaire (104) sur la base de ladite commande de fonctionnement et d'une vitesse du véhicule détectée par ledit dispositif de détection de vitesse du véhicule (110) ; et
un dispositif de contrôle et de gestion d'énergie (311) qui calcule une plage de contrôle d'une quantité de stockage dudit dispositif de batterie d'accumulateurs (105) sur la base de ladite vitesse de véhicule détectée par ledit dispositif de détection de vitesse du véhicule (110), crée une première commande de puissance du moteur afin que ladite quantité de stockage dudit dispositif de batterie d'accumulateurs (105) se trouve dans ladite plage de contrôle, produit une valeur de ladite première commande de puissance du moteur comme commande de puissance du moteur quand ladite première commande de puissance du moteur est inférieure audit courant nécessaire, produit une valeur 0 comme commande de puissance du moteur quand ledit courant nécessaire a une valeur négative, et autrement produit une valeur dudit courant nécessaire comme commande de puissance du moteur.
